(19) **Europäisches Patentamt / European Patent Office / Office européen des brevets**

(11) **EP 4 057 411 A1**

(12) **EUROPEAN PATENT APPLICATION**

(43) Date of publication:
**14.09.2022 Bulletin 2022/37**

(21) Application number: **22160610.6**

(22) Date of filing: **07.03.2022**

(51) International Patent Classification (IPC):
**H01M 10/052** (2010.01)   **H01M 50/403** (2021.01)
**H01M 50/446** (2021.01)   **H01M 50/451** (2021.01)
**H01M 50/457** (2021.01)

(52) Cooperative Patent Classification (CPC):
**H01M 50/403; H01M 10/052; H01M 50/446; H01M 50/451; H01M 50/457**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.03.2021 KR 20210030206**

(71) Applicant: **SK Innovation Co., Ltd.**
**Seoul 03188 (KR)**

(72) Inventors:
• **KIM, Whee Sung**
  **34124 Daejeon (KR)**
• **KIM, Jeong Han**
  **34124 Daejeon (KR)**
• **JO, Yun Kyung**
  **34124 Daejeon (KR)**
• **KIM, Jae Woong**
  **34124 Daejeon (KR)**

(74) Representative: **Stolmár & Partner**
**Patentanwälte PartG mbB**
**Blumenstraße 17**
**80331 München (DE)**

(54) **COMPOSITE SEPARATOR FOR SECONDARY BATTERY, METHOD FOR PRODUCING THE SAME, AND LITHIUM SECONDARY BATTERY INCLUDING THE SAME**

(57)    Provided are a composite separator for a secondary battery, a method for producing the same, and a lithium secondary battery including the same. Specifically, a composite separator for a secondary battery showing excellent physical properties such as thermal safety and electrochemical safety and also allowing simplification of a separator production process, a method for producing the same, and a lithium secondary battery including the same are provided.

EP 4 057 411 A1

Description

CROSS-REFERENCE TO RELATED APPLICATIONS

This application claims priority under 35 U.S.C. §119 to Korean Patent Application No. 10-2021-0030206, filed on March 8, 2021, in the Korean Intellectual Property Office, the disclosure of which is incorporated herein by reference in its entirety.

TECHNICAL FIELD

The following disclosure relates to a composite separator for a secondary battery, a method for producing the same, and a lithium secondary battery including the same.

BACKGROUND

A separator is a porous film disposed between a positive electrode and a negative electrode of a battery, and pores inside the film are impregnated with an electrolyte to provide a migration channel of lithium ions. In addition, the separator is a subsidiary material which prevents an internal short circuit of a positive electrode and a negative electrode even when a battery temperature is too high or external shock is applied, and plays an important role in securing battery safety. A separator for a secondary battery which has been the most used to date is a microporous thin film made of a polyethylene, which is thinned with higher strength by stretching and has fine and uniform holes by a separation phenomenon with a plasticizer.

Recently, as the use of a lithium secondary battery expands, a demand for a larger area and a higher capacity is on the rise. With the higher capacity of a secondary battery, an electrode plate area is increased and a larger amount of positive electrode or negative electrode active material is used in the same area, and thus, a problem arose in battery safety.

Thus, there is a growing demand for improvement of characteristics of a separator for high strength, high permeability, and thermal stability of the separator and electrical safety of a secondary battery during charge and discharge. The lithium secondary battery is required to have high mechanical strength for improving safety in a battery production process and during use of the battery, and also required to have high permeability for improving a capacity and output. In addition, high thermal safety is required.

For example, when thermal safety of the separator is lowered, an inter-electrode short circuit due to damage or deformation of the separator caused by a temperature rise in the battery may occur, so that a risk of overheating or fire of the battery increases.

In addition, with a higher capacity and a higher output of the lithium secondary battery, improvement of mechanical strength such as puncture strength of a separator for a lithium ion secondary battery is demanded in terms of safety. However, when the separator is thinned by the higher capacity, the mechanical properties such as puncture strength and tensile strength of the separator itself are deteriorated, which causes a problem in battery safety. In particular, when conventional separators are provided for a stack type secondary battery in which a plurality of positive electrodes and negative electrodes cut into a predetermined sized unit are sequentially stacked with the separator interposed therebetween, alignment defects occur, and thermal shrinkage, puncture strength, and the like are significantly low, resulting in lack of battery safety. Various attempts have been made in order to solve the problems, but there is no commercialized solution which is satisfactory enough so far.

In order to solve the problem, Korean Patent Laid-Open Publication No. 10-2016-0041492 discloses a separator having a coating layer including organic particles, inorganic particles, and a polyvinylidene fluoride dispersion formed on a porous substrate, and Korean Patent Registration No. 10-1915345 discloses a separator having a coating layer including flame retardant particles, inorganic particles, and a binder polymer formed on a porous substrate; however, the separators still lack safety, and when provided in a battery, cause problems such as poor penetration properties, poor appearance due to an electrolyte reaction, and deterioration of life characteristics due to electrolyte impregnation characteristics, and thus, improvement is demanded.

In particular, though a larger area and a higher capacity have been achieved, according to low thermal shrinkage, high puncture strength, high gas permeability, excellent electrolyte impregnability, excellent capacity retention rate of a battery, and the like, development of a technology to improve safety and physical properties of a separator and a battery is demanded.

[Related Art Documents]

[Patent Documents]

(Patent Document 0001) Korean Patent Laid-Open Publication No. 10-2016-0041492 (April 18, 2016)
(Patent Document 0002) Korean Patent Registration No. 10-1915345 (October 30, 2018)

## SUMMARY

An embodiment of the present invention is directed to providing a porous composite separator having excellent physical properties and safety even with a larger area and a higher capacity than a conventional separator for a secondary battery, and a battery including the porous composite separator.

In particular, an embodiment of the present invention is directed to providing a porous composite separator having improved thermal safety with low thermal shrinkage.

Another embodiment of the present invention is directed to providing a porous composite separator having excellent battery safety such as penetration properties.

Another embodiment of the present invention is directed to providing a porous composite separator having an improved capacity retention rate of a battery by excellent electrolyte impregnation.

Another embodiment of the present invention is directed to providing a porous composite separator, which is easy to secure pores to improve gas permeability, so that lithium ion migration is smooth and electrical properties such as a capacity retention rate of a battery are improved.

Another embodiment of the present invention is directed to providing a porous composite separator having significantly improved battery safety by preventing occurrence of an internal short circuit caused by damage of a separator in a secondary battery with excellent puncture strength.

Still another embodiment of the present invention is directed to providing a method for producing a porous composite separator, including: applying two or more kinds of inorganic particles on one or both surfaces of a porous substrate simultaneously by dual slot die coating; and after the applying, performing multi-stage drying to form a thermal resistant coating layer in which the two or more kinds of inorganic particles are separated into layers.

In particular, another embodiment of the present invention is directed to providing an effect of simplifying a production process while physical properties and safety of a porous composite separator produced by the above production method and a battery including the composite separator are significantly improved.

In one general aspect, a porous composite separator includes: a porous substrate; and a thermal resistant coating layer formed on one or both surfaces of the porous substrate.

Here, the thermal resistant coating layer may include two or more kinds of inorganic particles and may be separated into layers.

In an exemplary embodiment of the present invention, the thermal resistant coating layer may be separated into layers by any one or a combination of two or more selected from differences in specific gravity, size, and shape of the two or more kinds of inorganic particles.

In an exemplary embodiment of the present invention, the two or more kinds of inorganic particles may include first inorganic particles and second inorganic particles with a specific gravity difference of 0.5 g/cm$^3$ or more.

In an exemplary embodiment of the present invention, the first inorganic particles may have a specific gravity of more than 3 g/cm$^3$ and 6 g/cm$^3$ or less, and the second inorganic particles may have a specific gravity of 1 g/cm$^3$ or more and 3 g/cm$^3$ or less.

In an exemplary embodiment of the present invention, the first inorganic particles may be any one or a mixture of two or more selected from alumina, titanium oxide, barium titanium oxide, magnesium oxide, zirconia, and zinc oxide, and the second inorganic particles may be any one or a mixture of two or more selected from boehmite, aluminum hydroxide, magnesium hydroxide, and silica.

In an exemplary embodiment of the present invention, the two or more kinds of inorganic particles may include spherical inorganic particles or angled amorphous inorganic particles.

In an exemplary embodiment of the present invention, the two or more kinds of inorganic particles may include inorganic particles having an average particle diameter or a longest length of 100 nm to 2 $\mu$m, respectively.

In an exemplary embodiment of the present invention, the two or more kinds of inorganic particles may include inorganic particles having the average particle diameter or the longest length of 0.7 $\mu$m or more and inorganic particles having the average particle diameter or the longest length of 0.7 $\mu$m or less.

In an exemplary embodiment of the present invention, when the thermal resistant coating layer is separated into layers, a lower layer adjacent to one surface of the porous substrate may include 65 to 100% of the first inorganic particles based on a total content of the two or more kinds of inorganic particles.

In an exemplary embodiment of the present invention, the porous composite separator may have a thermal shrinkage measured at 160°C of 10% or less.

In an exemplary embodiment of the present invention, the porous composite separator may have a gas permeability of 300 sec/100 ml or less as measured in accordance with a measurement method of JIS P8117.

In an exemplary embodiment of the present invention, the porous composite separator may have a life capacity retention rate of 80% or more as measured under 2000 charge/discharge cycles.

In another general aspect, a lithium secondary battery includes the porous composite separator.

In still another general aspect, a method for producing a porous composite separator includes: applying two or more kinds of inorganic particles on one or both surfaces of a porous substrate simultaneously by dual slot die coating; and after the applying, performing multi-stage drying to form a thermal resistant coating layer in which the two or more kinds of inorganic particles are separated into layers.

In an exemplary embodiment of the present invention, the multistage-drying may include: drying at 70°C to 100°C for 20 seconds to 60 seconds; drying at 50°C to 70°C for 20 seconds to 60 seconds; and drying at 30°C to 50°C for 40 seconds to 60 seconds.

In an exemplary embodiment of the present invention, the thermal resistant coating layer may be separated into layers by any one or a combination of two or more selected from differences in specific gravity, size, and shape of the two or more kinds of inorganic particles.

In an exemplary embodiment of the present invention, the two or more kinds of inorganic particles may include first inorganic particles and second inorganic particles with a specific gravity difference of 0.5 $g/cm^3$ or more.

In an exemplary embodiment of the present invention, the first inorganic particles may have a specific gravity of more than 3 $g/cm^3$ and 6 $g/cm^3$ or less, and the second inorganic particles may have a specific gravity of 1 $g/cm^3$ or more and 3 $g/cm^3$ or less.

In an exemplary embodiment of the present invention, the first inorganic particles may be any one or a mixture of two or more selected from alumina, titanium oxide, barium titanium oxide, magnesium oxide, zirconia, and zinc oxide, and the second inorganic particles may be any one or a mixture of two or more selected from boehmite, aluminum hydroxide, magnesium hydroxide, and silica.

In an exemplary embodiment of the present invention, the two or more kinds of inorganic particles may include spherical inorganic particles or angled amorphous inorganic particles.

In an exemplary embodiment of the present invention, the two or more kinds of inorganic particles may include inorganic particles having an average particle diameter or a longest length of 100 nm to 2 $\mu$m, respectively.

In an exemplary embodiment of the present invention, the two or more kinds of inorganic particles may include inorganic particles having the average particle diameter or the longest length of 0.7 $\mu$m or more and inorganic particles having the average particle diameter or the longest length of 0.7 $\mu$m or less.

In an exemplary embodiment of the present invention, when the thermal resistant coating layer is separated into layers, a lower layer adjacent to one surface of the porous substrate may include 65 to 100% of the first inorganic particles based on a total content of the two or more kinds of inorganic particles.

In an exemplary embodiment of the present invention, the porous composite separator may have a thermal shrinkage measured at 160°C of 10% or less.

In an exemplary embodiment of the present invention, the porous composite separator may have a gas permeability of 300 sec/100 ml or less as measured in accordance with a measurement method of JIS P8117.

In an exemplary embodiment of the present invention, the porous composite separator may have a life capacity retention rate of 80% or more as measured under 2000 charge/discharge cycles.

Other features and aspects will be apparent from the following detailed description, the drawings, and the claims.

## BRIEF DESCRIPTION OF THE DRAWINGS

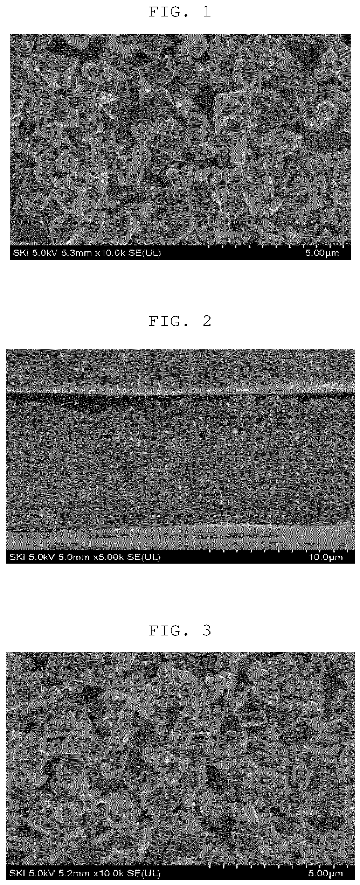

FIG. 1 is a scanning electron micrograph of a surface layer of a composite separator for a secondary battery according to an exemplary embodiment of the present invention, in which a ratio between first inorganic particles and second inorganic particles in an upper layer and a lower layer is 5:5.

FIG. 2 is a scanning electron micrograph of a cross section of the composite separator for a secondary battery according to an exemplary embodiment of the present invention, in which a ratio between the first inorganic particles and the second inorganic particles in the upper layer and the lower layer is 5:5.

FIG. 3 is a scanning electron micrograph of a surface layer of a composite separator for a secondary battery according to an exemplary embodiment of the present invention, in which ratios between the first inorganic particles and the second inorganic particles in an upper layer and a lower layer are 2:1 and 1:2, respectively.

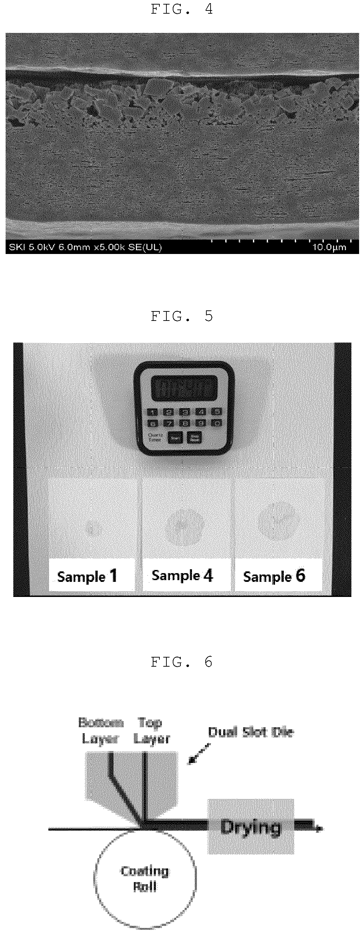

FIG. 4 is a scanning electron micrograph of a cross section of the composite separator for a secondary battery according to an exemplary embodiment of the present invention, in which ratios between the first inorganic particles and the second inorganic particles in the upper layer and the lower layer are 2:1 and 1:2, respectively.

FIG. 5 is a photograph for evaluating an electrolyte impregnation degree of the composite separator for a secondary battery according to an exemplary embodiment of the present invention.

FIG. 6 is a conceptual diagram illustrating a dual slot die coating process according to an exemplary embodiment of the present invention.

**DETAILED DESCRIPTION OF EMBODIMENTS**

Hereinafter, a composite separator for a secondary battery according to the present invention, a method for producing the same, and a lithium secondary battery including the same will be described in detail.

Herein, unless otherwise defined, all technical terms and scientific terms have the same meanings as those commonly understood by one of those skilled in the art to which the present invention pertains. The terms used herein are only for effectively describing a certain specific example, and are not intended to limit the present invention. Further, unless otherwise stated, the unit of added materials herein may be wt%.

In addition, the singular form used in the specification and claims appended thereto may be intended to also include a plural form, unless otherwise indicated in the context.

The present invention provides a porous composite separator of a new concept which shows excellent physical properties such as excellent thermal safety and electrochemical safety and also allows simplification of a separator production process as compared with a polyolefin-based separator used as a conventional separator for a battery.

Since the porous composite separator has improved thermal resistance, it may prevent ignition or rupture due to an abnormal phenomenon such as a rapid temperature rise. In addition, when included in a battery, the porous composite separator has significantly improved safety of a battery with excellent penetration properties.

In addition, when the porous composite separator is included in a battery and reacts with an electrolyte solution, a life capacity retention rate of a battery including the composite separator is significantly improved, with excellent electrolyte impregnation.

In addition, since the porous composite separator has excellent gas permeability and has smooth lithium ion migration, electrical properties such as a capacity retention rate of a battery may be significantly improved, and the porous composite separator has excellent puncture strength to prevent occurrence of an internal short circuit due to damage of the separator in a battery, thereby significantly improving battery safety.

Hereinafter, the present invention will be described in detail.

The porous composite separator according to an exemplary embodiment of the present invention may include a porous substrate; and a thermal resistant coating layer formed on one or both surfaces of the porous substrate.

Here, the thermal resistant coating layer may include two or more kinds of inorganic particles and may be separated into layers.

In the present invention, the thermal resistant coating layer may be separated into layers by any one or a combination of two or more selected from differences in specific gravity, size, and shape of the two or more kinds of inorganic particles.

Here, it is preferred that the thermal resistant coating layer is separated into layers by a specific gravity difference of the two or more kinds of inorganic particles, and it is more preferred that the thermal resistant coating layer is separated into layers by differences in specific gravity and size, differences in specific gravity and shape, or differences in specific gravity, size, and shape of the two or more kinds of inorganic particles, for deriving the effect according to the present invention.

However, this is only a non-limiting example, and the thermal coating layer may be separated into layers by any one or a combination thereof selected from size and shape of the two or more kinds of inorganic particles, of course, and also, the present invention is not limited thereto as long as the thermal resistant coating layer is separated into layers so that the effect according to the present invention may be derived.

In the present invention, the two or more kinds of inorganic particles may include first inorganic particles and second inorganic particles with a specific gravity difference of 0.5 $g/cm^3$ or more. The difference may be preferably 1.0 $g/cm^3$ or more, more preferably 3.0 $g/cm^3$ or more for deriving the effect of the present invention, but is not necessarily limited thereto.

Here, the first inorganic particles may have a specific gravity of more than 3 $g/cm^3$ and 6 $g/cm^3$ or less, and the second inorganic particles may have a specific gravity of 1 $g/cm^3$ or more and 3 $g/cm^3$ or less, but they are not necessarily limited thereto.

In addition, the first inorganic particles may be any one or a mixture of two or more selected from alumina, titanium oxide, barium titanium oxide, magnesium oxide, zirconia, and zinc oxide, and the second inorganic particles may be any one or a mixture of two or more selected from boehmite, aluminum hydroxide, magnesium hydroxide, and silica, but are only a non-limiting example, and are not necessarily limited thereto.

Here, it is more preferred that the first inorganic particles are alumina and the second inorganic particles are boehmite for deriving the effect according to the present invention, but the present invention is not necessarily limited thereto.

When the two or more kinds of inorganic particles include the first inorganic particles and the second inorganic particles having a specific gravity difference and form a gradient by the specific gravity difference, so that the thermal resistant coating layer is separated into layers, an interlayer binding force may be significantly improved to improve safety of the porous composite separator and a battery including the same.

The gradient may be better formed by applying the two or more kinds of inorganic particles simultaneously by dual slot die coating, and an interlayer binding force may be further improved.

In the present invention, the two or more kinds of inorganic particles may include spherical inorganic particles or angled amorphous inorganic particles.

Here, the "spherical" shape includes, in a common sense, not only a full spherical shape of which the surface is substantially at an equal distance from the center but also a round shape close to a spherical shape with no angle formed, and also, the "angled amorphous shape" is not particularly limited as long as an angled particle, and for example, may be selected from a polyhedral shape selected from amorphous, rod, tetrahedral, hexahedral, and octahedral shapes, and the like, a plate shape, and the like.

When the two or more kinds of inorganic particles include a plurality of inorganic particles having the shape difference as described above, and the thermal resistant coating layer is separated into layers by the shape difference, an interlayer binding force may be significantly improved to improve safety of the porous composite separator and the battery including the same.

In the present invention, the two or more kinds of inorganic particles may include inorganic particles having an average particle diameter or a longest length of 100 nm to 2 $\mu$m, respectively, and preferably, may include inorganic particles having the average particle diameter or the longest length of 200 nm to 1.5 $\mu$m, respectively. When the inorganic particles have the average particle diameter or the longest length as described above, thermal shrinkage may be significantly decreased and thermal resistance may be improved, a puncture strength is excellent and damage of the separator may be prevented to significantly improve battery safety, and it is easy to secure pores so that gas permeability may be improved and an electrolyte impregnation degree may also be improved.

Here, the average particle diameter of the spherical inorganic particles refers to D50 which is a particle diameter corresponding to 50% of a total volume when the particle diameter of each inorganic particle is measured and the volume is accumulated from small particles, and the longest length of the angled amorphous inorganic particles refers to D50 which is a size corresponding to 50% of a total volume when the size of each inorganic particle is measured and the volume is accumulated from small particles.

In the present invention, the two or more kinds of inorganic particles may include inorganic particles having the average particle diameter or the longest length of 0.7 $\mu$m or more and inorganic particles having the average particle diameter or the longest length of 0.7 $\mu$m or less.

When the two or more kinds of inorganic particles include a plurality of inorganic particles having the size difference as described above, a gradient is formed by the size difference and the thermal resistant coating layer may be separated into layers, and thus, an interlayer binding force may be significantly improved to improve safety of the porous composite separator and the battery including the same.

In the present invention, when the thermal resistant coating layer is separated into layers, a lower layer adjacent to one surface of the porous substrate may include 65 to 100% of the first inorganic particles based on the total content of the two or more kinds of inorganic particles. When the layer separation occurs as such, the porous composite separator has a layer capable of acting as a spacer increased to two or more, thereby significantly improving the safety of the separator and the battery, such as thermal resistance, electrolyte impregnation, and penetration properties, as compared with the coating layer formed of a single kind of inorganic particles.

In the present invention, the size, shape, and distribution of inorganic particles are determined by a scanning electron microscope, and XRD and FTIR analysis. In the X-ray diffraction (XRD) analysis, XRD and FTIR measurement conditions may be used without any limitation as long as they are measurement conditions known in the art.

In the present invention, the porous substrate may be used without limitation as long as it has high porosity so that lithium ions may migrate between the two electrodes. The porous substrate as such is those commonly used in the art, and mostly includes a polyolefin porous substrate represented by polyethylene or polypropylene and may include porous substrates made of other various materials. Specifically, the porous substrate may be any one or a mixture of two or more selected from polyethylene (high-density polyethylene, low-density polyethylene, linear low-density polyethylene, high molecular polyethylene, and the like), polypropylene, polypropylene terephthalate, polyethylene terephthalate, polybutylene terephthalate, polyester, polyacetal, polyamide, polycarbonate, polyimide, polyamideimide, polyetherimide, polyether ether ketone, polyethersulfone, polyphenylene oxide, polyphenylene sulfide, and polyethylene naphthalate, but is not necessarily limited thereto.

The thickness of the porous substrate is not particularly limited, but may be 5 to 30 $\mu$m. As the porous substrate, a porous substrate mainly made by stretching may be used, but the present invention is not necessarily limited thereto.

The porous substrate may have a tensile strength of 500 kgf/cm$^2$ or more, specifically 500 to 1,000 kgf/cm$^2$ in a transverse direction (TD) and a machine direction (MD), and preferably, may be produced by biaxial stretching in order to uniformly improving the strength in TD and MD. The porous substrate made by uniaxial stretching has an advantage of having tensile strength increased in a stretched direction, but still has stress to shrink in a stretching direction, and thus, may cause shrinkage when the temperature rises.

In the present invention, the porous composite separator may have a thermal shrinkage at 160°C of 10% or less, preferably 5% or less. Specifically, the thermal shrinkage may be 0.1 to 10%, preferably 0.1 to 5%. As described above, since the separator has a low thermal shrinkage, ignition or rupture due to an abnormal phenomenon such as a rapid temperature rise in a lithium secondary battery may be prevented.

In the present invention, the porous composite separator may have a gas permeability of 300 sec/100 ml or less, preferably 200 sec/100 ml or less per unit thickness as measured in accordance with a measurement method of JIS P8117. Specifically, the gas permeability may be 1 to 300 sec/100 ml, preferably 1 to 200 sec/100 ml. When the porous composite separator has the gas permeability as described above, lithium ions migrate well, so that electrical properties such as a capacity retention rate of a secondary battery may be significantly improved.

Since the porous composite separator has excellent thermal resistance and air permeability, a battery including the separator may have a significantly increased life capacity retention rate and penetration properties.

The life capacity retention rate (%) of a battery including the porous composite separator according to the present invention may be 80% or more, preferably 85% or more, and more preferably 90% or more, as a value measured by repeating charge and discharge 2,000 times from 5% to 95% of SOC (charge rate). Specifically, the life capacity retention rate may be 80 to 99.9%, preferably 85 to 99.9%, and more preferably 90 to 99.9% (charge conditions: CC/CV conditions of 1 C/4.14V, 2.58A cut-off, discharge conditions: CC conditions of 1 C, 3.03V cut-off).

According to the present invention, an intermediate layer formed when a mixture of two or more kinds of inorganic particles is separated into layers increases short resistance to show better penetration properties.

Another exemplary embodiment of the present invention provides a lithium secondary battery including the porous composite separator described above. The lithium secondary battery may be produced by including the porous composite separator according to an exemplary embodiment of the present invention, a positive electrode, a negative electrode, and an electrolyte solution.

Another exemplary embodiment of the present invention provides a method for producing a porous composite separator including: applying two or more kinds of inorganic particles on one or both surfaces of a porous substrate simultaneously by dual slot die coating; and after the applying, performing multi-stage drying to form a thermal resistant coating layer in which the two or more kinds of inorganic particles are separated into layers.

According to the present invention, in the method for producing a porous composite separator, even in the case of applying a mixture of the two or more kinds of inorganic particles on one or both surfaces of the porous substrate once, multi-stage drying may be performed to form a thermal resistant coating layer which is separated into layers by any one or a combination of two or more selected from the specific gravity, size, and shape of the two or more kinds of inorganic particles.

Here, the one application may include dual slot die coating or single slot die coating, and in deriving the effect according to the present invention, dual slot die coating is more preferred, but the present invention is not necessarily limited thereto.

According to the present invention, an interlayer binding force of the thermal resistant coating layer separated into layers is significantly increased as compared with a separator which is laminated on the porous substrate by a process of simply sequentially applying and drying the two or more kinds of inorganic particles, and thus, the porous composite separator by the production method and a battery including the same show excellent physical properties and safety, and also allow simplification of a process of producing a separator.

In the present invention, the dual slot die coating means that there are two nozzles to supply inorganic particles to a slot die, and two or more kinds of inorganic particles may be uniformly coated on one or both surfaces of the porous substrate, regardless of the specific gravity, size, shape, and the like of the inorganic particles.

Specifically, referring to FIG. 2, the application method by dual slot die coating is a method in which a slurry including inorganic particles coming out from a dual slot is applied on the porous substrate when the porous substrate passes a position where the dual slot die exists, along a roller. Since unlike a single slot die, two nozzles are included, and each slurry including different inorganic particles is simultaneously supplied from the two nozzles and applied on the porous substrate, the method has a structure in which two or more kinds of inorganic particles may be coated simultaneously even when coating is performed only once from one die.

In the present invention, an example of the multi-stage drying may include: drying at 70°C to 100°C for 20 seconds to 60 seconds; drying at 50°C to 70°C for 20 seconds to 60 seconds; and drying at 30°C to 50°C for 40 seconds to 60 seconds, but the present invention is not necessarily limited thereto.

In addition, another example of the multi-stage drying may include: drying at 75°C to 85°C for 20 seconds to 30 seconds; drying 55°C to 65°C for 20 seconds to 30 seconds; and drying at 35°C to 45°C for 40 seconds to 60 seconds, but the present invention is not necessarily limited thereto.

Hereinafter, the present invention will be described in more detail with reference to the Examples and Comparative Examples. However, the following Examples and Comparative Examples are only an example for describing the present invention in more detail, and do not limit the present invention in any way.

[Method of measuring physical properties]

(1) Content ratio of inorganic particles

A weight ratio of heterogeneous inorganic particles was calculated and a content ratio of inorganic particles was calculated by the following Calculation Formula 1:

[Calculation Formula 1]

$$\text{Content ratio of inorganic particles (\%)} = \left(\frac{\text{area of first inorganic particles}}{\text{area of second inorganic particles}}\right)^{2/3} \times \frac{\text{specific gravity of first inorganic particles}}{\text{specific gravity of second inorganic particles}}$$

wherein $\dfrac{\text{area of first inorganic particles}}{\text{area of second inorganic particles}}$ is an average value of three values of an area ratio of the heterogeneous inorganic particles by elemental analysis, using SEM-EDA.

(2) Size and shape of inorganic particles

In order to analyze the size and shape of inorganic particles, a scanning electron microscope (SEM), X-ray diffraction (XRD), and Fourier transform infrared spectroscopy (FTIR) were used. SEM analysis was performed using a field emission type scanning electron microscope (30keV, TESCAN MIRA 3) equipped with a backscattered electron diffraction pattern analyzer (Electron Back Scatter Diffraction, EBSD). XRD analysis was performed by an X-ray diffraction analyzer (model name: D/Max2000, manufacturer: Rigaku), and FTIR analysis was performed under the resolution conditions of $4cm^{-1}$ in a range of $500\text{-}4000cm^{-1}$ which is a Mid-IR region, using Nicolet 6700 FTIR System available from Thermo Fisher Scientific and SMART Orbit ATR Accessory (ZnSe).

(3) Gas permeability

A method of measuring a gas permeability of separators produced in the examples and the comparative examples followed the standard of JIS P8117, and a time for 100 ml of air to pass a separator having an area of 1 $inch^2$ was recorded in seconds and compared.

(4) Pin puncture strength

A method of measuring pin puncture strength of a separator follows the standard of ASTM D3763-02, and the measurement was performed three times for each sample and the average value thereof was taken.

(5) Thermal shrinkage at 160°C

In a method of measuring the thermal shrinkage of separators produced in the examples and the comparative examples at 160°C, a composite separator was cut into a square shape with 10 cm on each side to produce a sample, and the area of the sample before experiment was measured using a camera and recorded. Five sheets of paper were placed on and beneath the sample, respectively so that the sample was disposed at the center, and the four sides of the paper were clipped. The sample wrapped in paper was allowed to stand in a hot-air drying oven at 160°C for 1 hour. Thereafter, the sample was taken out and the area of the separator was measured with a camera to calculate the shrinkage by the following Calculation Formula 2:

[Calculation Formula 2]

Shrinkage (%) = (area before heating − area after heating) × 100 / area before heating

(6) Evaluation of penetration

When SOC (charge rate) of a secondary battery including the separators produced in the examples and the comparative examples was 80%, 90%, and 100%, evaluation of nail penetration was performed, respectively. Here, the diameter of the nail was 3.0 mm, and the penetration speed of the nail was all set at 80 mm/min. L1: no change, L2: slightly heated, L3: leaked, L4: fumed, and L5: ignited, in which L1 to L3 were judged as OK, and L4 and L5 were judged as NG.

(7) Evaluation of lifetime

Secondary batteries including the separators produced in the examples and the comparative examples were repeatedly charged and discharged at SOC (charge rate) from 5% to 95%, using a charger/discharger. Charging proceeded under the CC/CV conditions of 1 C/4.14 V, 2.58 A cut-off and discharging proceeded under the CC conditions of 1 C, 3.03 V cut-off, and a capacity retention rate (%) at 2,000 cycles was measured and is shown.

[Example 1]

Production of porous composite separator

50 parts by weight of a mixture in which 94 wt% of spherical alumina having an average particle diameter of 0.7 $\mu$m, 2 wt% of polyvinyl alcohol having a melting temperature of 220°C and a saponification degree of 99%, and 4 wt% of acryl latex having Tg of -52°C (ZEON, BM900B, solid content: 20 wt%) were mixed with respect to 100 parts by weight of water was mixed and stirred to produce a uniformly dispersed, first inorganic particle slurry. 50 parts by weight of a mixture in which 94 wt% of angled amorphous boehmite having a longest length of 0.7 $\mu$m, 2 wt% of polyvinyl alcohol having a melting temperature of 220°C and a saponification degree of 99%, and 4 wt% of acryl latex having Tg of -52°C (ZEON, BM900B, solid content: 20 wt%) were mixed with respect to 100 parts by weight of water was mixed and stirred to produce a uniformly dispersed, second inorganic particle slurry. As a porous substrate, a polyolefin microporous product having a thickness of 9 $\mu$m (SK Innovation, ENPASS) was used, and both surfaces of the porous substrate were coated with the first inorganic particle slurry and the second inorganic particle slurry simultaneously at a speed of 10 m/min, using a dual slot die. Multi-stage drying was performed at 80°C for 20 seconds, 60°C for 20 seconds, and 40°C for 40 seconds by a dryer to evaporate water, and then winding was performed.

A porous composite separator having a thermal resistant coating layer separated into two layers formed on the porous substrate layer was produced, in which a ratio between the first inorganic particles and the second inorganic particles in a lower layer of the thermal resistant coating layer was 100:0, and a ratio between the first inorganic particles and the second inorganic particles in an upper layer was 0:100. In addition, the physical properties of the porous composite separator accordingly are shown in the following Table 2.

Production of lithium secondary battery

1) Production of positive electrode

94 wt% of LiCoO$_2$ as a positive active material, 2.5 wt% of polyvinylidene fluoride as an adhesive, and 3.5 wt% of Super P (Imerys) as a conductive agent were added to N-methyl-2-pyrrolidone (NMP) as an organic solvent, and stirring was performed to produce a uniform positive electrode slurry. An aluminum foil having a thickness of 30 $\mu$m was coated with the slurry, dried at a temperature of 120°C, and pressed to produce a positive electrode plate having a thickness of 150 $\mu$m.

2) Production of negative electrode

95 wt% of artificial graphite as a negative electrode active material, 3 wt% of acrylic latex (BM900B, solid content: 20 wt%) having Tg of -52°C, and 2 wt% of carboxymethyl cellulose (CMC) as a thickener were added to water as a solvent, and stirring was performed to produce a uniform negative electrode slurry. A copper foil having a thickness of 20 μm was coated with the slurry, dried at a temperature of 120°C, and pressed to produce a negative electrode plate having a thickness of 150 μm.

3) Production of battery

The positive electrode, the negative electrode, and the porous composite separator produced above were used to assemble a pouch type battery in a stacking manner, and to each assembled battery, an electrolyte solution in which 1M lithium hexafluorophosphate (LiPF$_6$) was dissolved in ethylene carbonate (EC)/ethyl methyl carbonate (EMC)/dimethyl carbonate (DMC) = 3:5:2 (volume ratio) was injected to produce a lithium secondary battery.
The life capacity retention rate (%) and the penetration properties of the battery were measured and are shown in the following Tables 2 and 3.

[Example 2]

The process was performed in the same manner as in Example 1, except that a ratio between the first inorganic particles and the second inorganic particles in the lower layer of the thermal resistant coating layer was 90:10, and a ratio between the first inorganic particles and the second inorganic particles in an upper layer was 10:90. The physical properties of the porous composite separator and the battery therefrom are shown in the following Tables 2 and 3.

[Example 3]

The process was performed in the same manner as in Example 1, except that a ratio between the first inorganic particles and the second inorganic particles in the lower layer of the thermal resistant coating layer was 80:20, and a ratio between the first inorganic particles and the second inorganic particles in an upper layer was 20:80. The physical properties of the porous composite separator and the battery therefrom are shown in the following Tables 2 and 3.

[Example 4]

The process was performed in the same manner as in Example 1, except that a ratio between the first inorganic particles and the second inorganic particles in the lower layer of the thermal resistant coating layer was 70:30, and a ratio between the first inorganic particles and the second inorganic particles in an upper layer was 30:70. The physical properties of the porous composite separator and the battery therefrom are shown in the following Tables 2 and 3.

[Example 5]

The process was performed in the same manner as in Example 1, except that a ratio between the first inorganic particles and the second inorganic particles in the lower layer of the thermal resistant coating layer was 60:40, and a ratio between the first inorganic particles and the second inorganic particles in an upper layer was 40:60. The physical properties of the porous composite separator and the battery therefrom are shown in the following Tables 2 and 3.

[Example 6]

The process was performed in the same manner as in Example 1, except that a ratio between the first inorganic particles and the second inorganic particles in the lower layer of the thermal resistant coating layer was 50:50, and a ratio between the first inorganic particles and the second inorganic particles in an upper layer was 50:50. The physical properties of the porous composite separator and the battery therefrom are shown in the following Tables 2 and 3.

[Comparative Example 1]

The process was performed in the same manner as in Example 1, except that both of the surfaces of the porous substrate were coated with only the first inorganic particle slurry, instead of being coated with the first inorganic particle slurry and the second inorganic particle slurry simultaneously, and the results are shown in Tables 1 and 2.

[Comparative Example 2]

The process was performed in the same manner as in Examples 1 to 6, except that both of the surfaces of the porous substrate were coated with only the second inorganic particle slurry, instead of being coated with the first inorganic particle slurry and the second inorganic particle slurry simultaneously, and the results are shown in Tables 1 and 2.

[Table 1]

| | | Inorganic particles ratio in lower layer | Inorganic particles ratio in upper layer |
|---|---|---|---|
| Comparative Example 1 (ref. 1) | First inorganic particles | 100% | |
| Comparative Example 2 (ref. 2) | Second inorganic particles | 100% | |
| Example 1 (sample 1) | First inorganic particles | 100% | 0% |
| | Second inorganic particles | 0% | 100% |
| Example 2 (sample 2) | First inorganic particles | 90% | 10% |
| | Second inorganic particles | 10% | 90% |
| Example 3 (sample 3) | First inorganic particles | 80% | 20% |
| | Second inorganic particles | 20% | 80% |
| Example 4 (sample 4) | First inorganic particles | 70% | 30% |
| | Second inorganic particles | 30% | 70% |
| Example 5 (sample 5) | First inorganic particles | 60% | 40% |
| | Second inorganic particles | 40% | 60% |
| Example 6 (sample 6) | First inorganic particles | 50% | 50% |
| | Second inorganic particles | 50% | 50% |

[Table 2]

| | Physical properties of separator | | | | | Results of battery evaluation | |
|---|---|---|---|---|---|---|---|
| | Permeabili ty (sec/cc) | Puncture strength (gf) | Thermal shrinkage at 160°C (%) | Electrolyte impregnation | Manufacturing processability | Penetra tion OK SOC (%) | Life capacity retention rate (%) |
| Comparative Example 1 (Ref. 1) | 222 | 488 | 7.95 | Normal | ○ | 80 | 85 |
| Comparative Example 2 (Ref. 2) | 218 | 485 | 7.58 | Normal | ○ | 80 | 87 |

(continued)

| | Physical properties of separator | | | | | Results of battery evaluation | |
|---|---|---|---|---|---|---|---|
| | Permeability (sec/cc) | Puncture strength (gf) | Thermal shrinkage at 160°C (%) | Electrolyte impregnation | Manufacturing processability | Penetration OK SOC (%) | Life capacity retention rate (%) |
| Example 1 (sample 1) | 202 | 486 | 4.86 | Good | ○ | 100 | 85 |
| Example 2 (sample 2) | 205 | 490 | 4.82 | Good | ○ | 100 | 84 |
| Example 3 (sample 3) | 199 | 488 | 4.92 | Good | ○ | 100 | 90 |
| Example 4 (sample 4) | 195 | 492 | 4.90 | Good | ○ | 100 | 92 |
| Example 5 (sample 5) | 193 | 490 | 4.89 | Good | ○ | 90 | 91 |
| Example 6 (sample 6) | 193 | 485 | 4.95 | Good | ○ | 90 | 93 |

As seen in Table 2, it was confirmed that the porous composite separator according to the present invention had excellent gas permeability, low thermal shrinkage, high puncture strength, and excellent electrolyte impregnability, and the battery including the separator had a life capacity retention rate improved up to preferably 90% or more and penetration properties which were also excellent, and thus, battery safety was significantly improved.

In particular, as compared with Comparative Examples 1 and 2, the thermal safety and thermal resistance were significantly improved so that the thermal shrinkage may be lowered to 5% or less, and thus, it was confirmed that ignition or rupture due to an abnormal phenomenon such as a rapid temperature rise may be prevented.

[Table 3]

| | Penetration SOC 80% | Penetration SOC 90% | Penetration SOC 100% |
|---|---|---|---|
| Comparative Example 1 (ref. 1) | OK | NG | NG |
| Comparative Example 2 (ref. 2) | OK | NG | NG |
| Example 1 (sample 1) | OK | OK | OK |
| Example 2 (sample 2) | OK | OK | OK |
| Example 3 (sample 3) | OK | OK | OK |
| Example 4 (sample 4) | OK | OK | OK |
| Example 5 (sample 5) | OK | OK | NG |
| Example 6 (sample 6) | OK | OK | NG |

As seen from Table 3, it was confirmed that the battery including the porous composite separator according to the present invention may have SOC maintaining the safety of the battery of 80% or more, preferably 90% or more, and more preferably up to 100%, even in the case of nail penetration.

In Comparative Examples 1 and 2, it was confirmed that when SOC was 90% or more, the safety of the battery was not maintained after nail penetration, and thus, it was confirmed that the porous according to the present invention and the battery including the same had an effect of having excellent penetration properties and battery safety.

The porous composite separator according to an exemplary embodiment of the present invention has improved thermal resistance, and thus, may prevent ignition or rupture due to an abnormal phenomenon such as a rapid temperature rise.

In addition, since penetration properties of a battery including the porous composite separator according to an exemplary embodiment of the present invention are improved, battery safety may be significantly improved.

In addition, since the porous composite separator according to an exemplary embodiment has excellent electrolyte impregnation, a life capacity retention rate of a battery including the composite separator may be significantly improved.

In addition, since the porous composite separator according to an exemplary embodiment of the present invention has excellent gas permeability, lithium ion migration is smooth and electrical properties of a battery, such as a capacity retention rate, may be significantly improved.

In addition, the porous composite separator according to an exemplary embodiment of the present invention prevents occurrence of an internal short circuit due to damage of the separator in a secondary battery with excellent puncture strength, thereby significantly improving battery safety.

Therefore, since a porous composite separator having excellent physical properties and safety even with a higher area and a higher capacity than a conventional separator for a secondary battery, and a battery including the composite separator may be provided, the present invention may be introduced in order to improve performance such as thermal stability and electrical properties of a large lithium secondary battery applied to electric vehicles and the like.

Hereinabove, although the present invention has been described by specified matters and specific exemplary embodiments, they have been provided only for assisting in the entire understanding of the present invention. Therefore, the present invention is not by the specific matters limited to the exemplary embodiments. Various modifications and changes may be made by those skilled in the art to which the present invention pertains from this description.

Therefore, the spirit of the present invention should not be limited to the above-described exemplary embodiments, and the following claims as well as all modified equally or equivalently to the claims are intended to fall within the scope and spirit of the invention.

**Claims**

1. A porous composite separator comprising:

   a porous substrate; and
   a thermal resistant coating layer formed on one or both surfaces of the porous substrate,
   wherein the thermal resistant coating layer includes two or more kinds of inorganic particles and the two or more kinds of inorganic particles are separated into layers.

2. The porous composite separator of claim 1, wherein the thermal resistant coating layer is separated into layers by any one or a combination of two or more selected from differences in specific gravity, size, and shape of the two or more kinds of inorganic particles.

3. The porous composite separator of claim 1, wherein the two or more kinds of inorganic particles include first inorganic particles and second inorganic particles with a specific gravity difference of 0.5 $g/cm^3$ or more.

4. The porous composite separator of claim 3, wherein the first inorganic particles have a specific gravity of more than 3 $g/cm^3$ and 6 $g/cm^3$ or less, and the second inorganic particles have a specific gravity of 1 $g/cm^3$ or more and 3 $g/cm^3$ or less.

5. The porous composite separator of claim 3, wherein the first inorganic particles are any one or a mixture of two or more selected from alumina, titanium oxide, barium titanium oxide, magnesium oxide, zirconia, and zinc oxide, and the second inorganic particles are any one or a mixture of two or more selected from boehmite, aluminum hydroxide, magnesium hydroxide, and silica.

6. The porous composite separator of claim 1, wherein the two or more kinds of inorganic particles include spherical inorganic particles or angled amorphous inorganic particles.

7. The porous composite separator of claim 1, wherein the two or more kinds of inorganic particles include inorganic particles having an average particle diameter or a longest length of 100 nm to 2 $\mu$m, respectively.

8. The porous composite separator of claim 7, wherein the two or more kinds of inorganic particles include inorganic particles having the average particle diameter or the longest length of 0.7 $\mu$m or more and inorganic particles having the average particle diameter or the longest length of 0.7 $\mu$m or less.

9. The porous composite separator of claim 1, wherein when the thermal resistant coating layer is separated into layers, a lower layer adjacent to one surface of the porous substrate includes 65 to 100% of the first inorganic particles based on a total content of the two or more kinds of inorganic particles.

10. The porous composite separator of claim 1, wherein the porous composite separator has a thermal shrinkage measured at 160°C of 10% or less.

11. The porous composite separator of claim 1, wherein the porous composite separator has a gas permeability of 300 sec/100 ml or less as measured in accordance with a measurement method of JIS P8117.

12. The porous composite separator of claim 1, wherein the porous composite separator has a life capacity retention rate of 80% or more as measured under 2000 charge and discharge cycles of a battery including the porous composite separator.

13. A lithium secondary battery comprising the porous composite separator of any one of claims 1 to 12.

14. A method for producing a porous composite separator, the method comprising:

applying two or more kinds of inorganic particles on one or both surfaces of a porous substrate simultaneously by dual slot die coating; and
after the applying, performing multi-stage drying to form a thermal resistant coating layer in which the two or more kinds of inorganic particles are separated into layers.

15. The method for producing a porous composite separator of claim 14,

wherein the multi-stage drying includes drying at 70°C to 100°C for 20 seconds to 60 seconds;
drying at 50°C to 70°C for 20 seconds to 60 seconds; and drying at 30°C to 50°C for 40 seconds to 60 seconds.

16. The method for producing a porous composite separator of claim 14, wherein the thermal resistant coating layer is separated into layers by any one or a combination of two or more selected from differences in specific gravity, size, and shape of the two or more kinds of inorganic particles.

17. The method for producing a porous composite separator of claim 14, wherein the two or more kinds of inorganic particles include first inorganic particles and second inorganic particles with a specific gravity difference of 0.5 g/cm$^3$ or more.

18. The method for producing a porous composite separator of claim 17, wherein the first inorganic particles have a specific gravity of more than 3 g/cm$^3$ and 6 g/cm$^3$ or less, and the second inorganic particles have a specific gravity of 1 g/cm$^3$ or more and 3 g/cm$^3$ or less.

19. The method for producing a porous composite separator of claim 17, wherein the first inorganic particles are any one or a mixture of two or more selected from alumina, titanium oxide, barium titanium oxide, magnesium oxide, zirconia, and zinc oxide, and the second inorganic particles are any one or a mixture of two or more selected from boehmite, aluminum hydroxide, magnesium hydroxide, and silica.

20. The method for producing a porous composite separator of claim 14, wherein the two or more kinds of inorganic particles include spherical inorganic particles or angled amorphous inorganic particles.

21. The method for producing a porous composite separator of claim 14, wherein the two or more kinds of inorganic particles include inorganic particles having an average particle diameter or a longest length of 100 nm to 2 μm, respectively.

22. The method for producing a porous composite separator of claim 14, wherein the two or more kinds of inorganic particles include inorganic particles having the average particle diameter or the longest length of 0.7 μm or more and inorganic particles having the average particle diameter or the longest length of 0.7 μm or less.

23. The method for producing a porous composite separator of claim 14, wherein when the thermal resistant coating layer is separated into layers, a lower layer adjacent to one surface of the porous substrate includes 65 to 100% of the first inorganic particles based on a total content of the two or more kinds of inorganic particles.

24. The method for producing a porous composite separator of claim 14, wherein the porous composite separator has a thermal shrinkage measured at 160°C of 10% or less.

25. The method for producing a porous composite separator of claim 14, wherein the porous composite separator has a gas permeability of 300 sec/100 ml or less as measured in accordance with a measurement method of JIS P8117.

26. The method for producing a porous composite separator of claim 14, wherein the porous composite separator has a life capacity retention rate of 80% or more as measured under 2000 charge and discharge cycles of a battery including the porous composite separator.

FIG. 1

FIG. 2

FIG. 3

FIG. 4

SKI 5.0kV 6.0mm x5.00k SE(UL)      10.0µm

FIG. 5

Sample 1     Sample 4     Sample 6

FIG. 6

Europäisches
Patentamt

European
Patent Office

Office européen
des brevets

# EUROPEAN SEARCH REPORT

**Application Number**

EP 22 16 0610

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 2019 0110249 A (SK INNOVATION CO LTD [KR]) 30 September 2019 (2019-09-30) * par. 37, 45, 106-108, 155, 156 * ----- | 1-26 | INV. H01M10/052 H01M50/403 H01M50/446 H01M50/451 H01M50/457 |

TECHNICAL FIELDS
SEARCHED      (IPC)

H01M

The present search report has been drawn up for all claims

| Place of search | Date of completion of the search | Examiner |
|---|---|---|
| Munich | 13 July 2022 | Bettio, Andrea |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

**EP 22 16 0610**

This annex lists the patent family members relating to the patent documents cited in the above-mentioned European search report.
The members are as contained in the European Patent Office EDP file on
The European Patent Office is in no way liable for these particulars which are merely given for the purpose of information.

**13-07-2022**

| Patent document cited in search report | Publication date | Patent family member(s) | Publication date |
|---|---|---|---|
| KR 20190110249 A | 30-09-2019 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210030206
- KR 1020160041492
- KR 101915345